# EUROPEAN PATENT SPECIFICATION

(11) **EP 4 077 542 B1**
(45) Date of publication and mention of the grant of the patent: **17.06.2026**
(21) Application number: 20817372.4
(22) Date of filing: 07.12.2020
(51) Int. Cl.: C08L 77/02, F04D 29/28

(54) **INDUSTRIAL FAN OR BLOWER COMPRISING A FLAME-RETARDANT POLYAMIDE COMPOSITION**
INDUSTRIELLER VENTILATOR ODER FÖN ENTHALTEND EINE FLAMMHEMMENDE POLYAMIDZUSAMMENSETZUNG
VENTILATEUR INDUSTRIEL COMPRENANT UNE COMPOSITION DE POLYAMIDE IGNIFUGE

(30) Priority: 16.12.2019 US 201962948355 P; 22.01.2020 EP 20153098
(43) Date of publication of application: 26.10.2022
(60) Divisional application: 23216820.3
(73) Proprietor: BASF SE, 67056 Ludwigshafen am Rhein (DE)
(72) Inventor: NATARAJAN, Kavilipalayam, Budd Lake, NJ 07828 (US); HANLEY, Stephen J, Budd Lake, NJ 07828 (US); MCPEEK, Brian Marshall, Wyandotte, MI 48192 (US)
(74) Representative: BASF IP Association
(86) International application number: PCT/EP2020/084927
(87) International publication number: WO 2021/122111

(56) References cited:
- WO-A1-2013/189676
- CN-A- 101 759 992

## Description

### FIELD OF INVENTION

The present invention relates to an industrial fan or blower comprising a flame-retardant polyamide composition.

### BACKGROUND OF THE INVENTION

It is well-known in the art to produce flame-retardant polymer compositions for various applications. The requirement for various flame retardancy properties of the polymer composition vary depending on the intended final use of the polymer composition. For example, the requirements relating to heat release, smoke production, vertical flame propagation, smoke density, smoke acidity and melt viscosity may vary depending on the intended final use of the polymer composition. The requirements for other properties (e.g. mechanical properties such as stiffness and tensile strength) may also vary depending on the intended final use of the polymer composition. These properties may be affected by the additives that are included in the polymer composition to obtain the required flame-retardancy properties.

Polymer compositions, such as polyamide-based compositions blended with suitable flame-retardants, are known in the art. These compositions typically employ polyamide 6 and/or polyamide 66 and have been used for molding applications. Further, these compositions are known to have acceptable flame-retardant properties meeting the fire resistance requirements in accordance with UL94 standard. In particular, the existing compositions are known to meet the flame-retardancy requirements of V-2 in accordance with the UL94 standard.

WO 2018/187638 A1 discloses a flame-retardant polymer composition comprising a polymer, a flame retardant, a high aspect ratio particulate material, and optionally a reinforcing material. This composition is disclosed to have a flame retardancy rating equal to or greater than V-2 when measured using the UL94 standard.

US 6,146,557 B1 relates to a fire-resistant composition having fire resistance as high as V-0 or more in a vertical flammability test in accordance with UL94 standard. The composition comprises 100 parts by weight of thermoplastic resin, 10 to 300 parts by weight of at least one flame-retardant selected from the group consisting of a nitrogen base flame retardant having no halogen atoms, a phosphorus base flame retardant having no halogen atoms and a nitrogen phosphorus base flame retardant having no halogen atoms, and 1 to 100 parts by weight of phyllosilicate hydrate.

EP 0,278,555 A1 discloses polyamide composition comprising a thermoplastic polyamide in an amount of at least 40 percent by weight of the composition, a flame-retardant consisting essentially of red phosphorus, said red phosphorus making upto 4 to 15 percent by weight of the composition, magnesium hydroxide in an amount of 5 to 40 percent by weight of the composition, and mineral reinforcing fibres in an amount of 5 to 50 percent by weight of the composition, the total amount of said flame retardant and said magnesium hydroxide being not more than 50 percent by weight of the composition. This composition is disclosed to have flame retardancy of V-0 according to UL94 standard. CN 101 759 992 A discloses a fan comprising a halogen-free fire retardant polymer composition comprising nylon 6, reinforcing agents, an impact modifier, a dispersing agent , a stabilizer and a mixture of flame retardants.

The existing polymer compositions, particularly the polyamide-based compositions, have several limitations. One such limitation is that the flame-retardancy of these compositions is not of the highest quality, i.e. these compositions meet the requirements of V-0, V-1 or V-2 in accordance with UL94 standard. Further, these compositions do not provide for acceptable properties, such as but not limited to, tensile strength, %elongation, flexural strength and Charpy notch strength. Additionally, the presence of other ingredients, such as but not limited to, flame retardants, for e.g. nitrogen based, and filler materials, for e.g. talc, render it difficult to process. Moreover, the existing polyamide compositions have not been disclosed to be used for industrial fans or blowers.

It was, therefore, an object of the present invention to provide an industrial fan or blower comprising a flame-retardant polyamide composition which can meet the highest quality of fire resistance, i.e. 5VA in accordance with UL94 standard, can be easily processed, and still showcase acceptable properties of tensile strength, %elongation, flexural strength and Charpy notch strength.

### SUMMARY OF THE INVENTION

Surprisingly, it has been found that the above-identified object is met by providing a flame-retardant polyamide composition to be used for a fan or blower comprising, among others, a flame-retardant mixture having (i) 1.0 to 10.0 wt.% of red phosphorus, and (ii) 1.0 to 10.0 wt.% of magnesium hydroxide, based on the total weight of the flame retardant polyamide composition, wherein the weight ratio between (i) and (ii) in the flame retardant mixture is in between 1:5 to 5:1, and wherein the flame-retardant composition has a viscosity number of at least 114 ml/g, determined according to ISO 307.

Accordingly, in one aspect, the presently claimed invention is directed to an industrial fan or blower comprising a flame-retardant polyamide composition comprising
(a) 20 wt.% to 60 wt.% of a polyamide having a viscosity number in between 90 ml/g to 350 ml/g determined according to ISO 307,
(b) 20 wt.% to 50 wt.% of a reinforcing agent,
(c) a flame-retardant mixture comprising (i) 1.0 to 10.0 wt.% of red phosphorus, and (ii) 1.0 to 10.0 wt.% of magnesium hydroxide, based on the total weight of the flame-retardant polyamide composition, wherein the weight ratio between (i) and (ii) in the flame-retardant mixture is in between 1:5 to 5:1,
(d) 0.1 wt.% to 10.0 wt.% of an impact modifier,
(e) 0.01 to 5.0 wt.% of a stabilizer, and
(f) 0.1 to 5.0 wt.% of a dispersing agent,
wherein the flame-retardant polyamide composition has a viscosity number of at least 114 ml/g, determined according to ISO 307.

### DETAILED DESCRIPTION OF THE INVENTION

Before the present compositions and formulations of the invention are described, it is to be understood that this invention is not limited to particular compositions and formulations described, since such compositions and formulation may, of course, vary. It is also to be understood that the terminology used herein is not intended to be limiting, since the scope of the present invention will be limited only by the appended claims.

The terms "comprising", "comprises" and "comprised of' as used herein are synonymous with "including", "includes" or "containing", "contains", and are inclusive or open-ended and do not exclude additional, non-recited members, elements or method steps. It will be appreciated that the terms "comprising", "comprises" and "comprised of" as used herein comprise the terms "consisting of", "consists" and "consists of".

Furthermore, the terms "first", "second", "third" or "(a)", "(b)", "(c)", "(d)" etc. and the like in the description and in the claims, are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein. In case the terms "first", "second", "third" or "(A)", "(B)" and "(C)" or "(a)", "(b)", "(c)", "(d)", "i", "ii" etc. relate to steps of a method or use or assay there is no time or time interval coherence between the steps, that is, the steps may be carried out simultaneously or there may be time intervals of seconds, minutes, hours, days, weeks, months or even years between such steps, unless otherwise indicated in the application as set forth herein above or below.

In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous. Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment but may. Furthermore, the features, structures or characteristics may be combined in any suitable manner, as would be apparent to a person skilled in the art from this disclosure, in one or more embodiments. Furthermore, while some embodiments described herein include some, but not other features included in other embodiments, combinations of features of different embodiments are meant to be within the scope of the invention, and form different embodiments, as would be understood by those in the art. For example, in the appended claims, any of the claimed embodiments can be used in any combination.

Furthermore, the ranges defined throughout the specification include the end values as well, i.e. a range of 1 to 10 implies that both 1 and 10 are included in the range.

Industrial fan or blower comprising a flame-retardant polyamide composition

An aspect of the present invention is embodiment 1, directed to an industrial fan or blower comprising a flame-retardant polyamide composition comprising
(a) 20 wt.% to 60 wt.% of a polyamide having a viscosity number in between 90 ml/g to 350 ml/g, determined according to ISO 307,
(b) 20 wt.% to 50 wt.% of a reinforcing agent,
(c) a flame-retardant mixture comprising (i) 1.0 to 10.0 wt.% of red phosphorus, and (ii) 1.0 to 10.0 wt.% of magnesium hydroxide, based on the total weight of the flame-retardant polyamide composition, wherein the weight ratio between (i) and (ii) in the flame-retardant mixture is in between 1:5 to 5:1,
(d) 0.1 wt. % to 10.0 wt.% of an impact modifier,
(e) 0.01 to 5.0 wt.% of a stabilizer, and
(f) 0.1 to 5.0 wt.% of a dispersing agent,
wherein the flame retardant polyamide composition has a viscosity number of at least 114 ml/g, determined according to ISO 307.

In the present context, the phrases "composition" and "polyamide composition" are interchangeably used to refer to the flame-retardant polyamide composition of the embodiment 1.

In the present context, the phrase "ingredient" refers to (a), (b), (c), (d), (e), and (f) in the polyamide composition of the embodiment 1, as described herein.

In the present context, the viscosity number is determined from a 0.5 wt.% solution of the polyamide composition in 96 wt.% sulfuric acid at 25°C, according to ISO 307.

In one embodiment, the viscosity number of the polyamide composition is required to be equal to or more than 114 ml/g. This is because a viscosity number of less than 114 ml/g tends to drip during the flame retardancy test, despite adding the flame retardants. This renders the composition unacceptable because dripping causes flame failure in the 5VA test.

In another embodiment, the flame-retardant polyamide composition in the embodiment 1 does not contain any talc or phyllosilicates, for e.g. phyllosilicate hydrate.

### Polyamide

Suitable polyamides in the embodiment 1 have the viscosity number ranging between 90 ml/g to 350 ml/g, determined according to ISO 307. The polyamides are selected such that the viscosity number of the flame-retardant polyamide composition is at least 114 ml/g, as described herein.

In one embodiment, the viscosity number of the polyamide in embodiment 1 is in between 90 ml/g to 340 ml/g, or in between 100 ml/g to 340 ml/g, or in between 100 ml/g to 330 ml/g, or in between 100 ml/g to 320 ml/g, or in between 100 ml/g to 310 ml/g, or in between 100 ml/g to 300 ml/g. In other embodiment, it is in between 110 ml/g to 300 ml/g, or in between 110 ml/g to 290 ml/g, or in between 110 ml/g to 280 ml/g, or in between 110 ml/g to 280 ml/g, or in between 110 ml/g to 270 ml/g, or in between 120 ml/g to 270 ml/g, or in between 120 ml/g to 260 ml/g, or in between 120 ml/g to 250 ml/g, or in between 120 ml/g to 240 ml/g, or in between 120 ml/g to 230 ml/g, or in between 120 ml/g to 220 ml/g. In yet another embodiment, it is in between 130 ml/g to 220 ml/g, or in between 130 ml/g to 210 ml/g, or in between 140 ml/g to 210 ml/g, or in between 150 ml/g to 210 ml/g, or in between 150 ml/g to 210 ml/g, or in between 160 ml/g to 210 ml/g. In a further embodiment, it is in between 170 ml/g to 210 ml/g, or in between 180 ml/g to 210 ml/g.

In one embodiment, the polyamides in the embodiment 1 can be selected from aromatic and aliphatic polyamides. In another embodiment, the polyamide in the embodiment 1 comprises an aliphatic polyamide.

In another embodiment, the polyamide in the embodiment 1 are, for example, derived from lactams having 7 to 13 ring members or obtained by reaction of dicarboxylic acids with diamines. Examples of polyamides which are derived from lactams include polycaprolactam, polycaprylo-lactam, and/or polylaurolactam.

In yet another embodiment, the polyamides in the embodiment 1 also include those obtainable from ω-aminoalkyl nitriles, such as but not limited to, aminocapronitrile, which leads to nylo-6. In addition, dinitriles can be reacted with diamine. For example, adiponitrile can be reacted with hexamethylenediamine to obtain nylon-6,6. The polymerization of nitriles is effected in the presence of water and is also known as direct polymerization.

When polyamides obtainable from dicarboxylic acids and diamines are used, dicarboxylalkanes (aliphatic dicarboxylic acids) having 6 to 36 carbon atoms, or 6 to 12 carbon atoms, or 6 to 10 carbon atoms can be employed. Aromatic dicarboxylic acids are also suitable. Examples of dicarboxylic acids include adipic acid, azelaic acid, sebacic acid, dodecanedioic acid, and also terephthalic acid and/or isophthalic acid.

Suitable diamines include, for example, alkanediamines having 5 to 36 carbon atoms, or 6 to 12 carbon atoms, or 6 to 8 carbon atoms, and aromatic diamines, for example, m-xylylenediamine, di(4-aminophenyl)methane, di(4-aminocyclohexyl)methane, 2,2-di(4-aminophenyl)propane, 2,2-di(4-aminocyclohexyl)propane, and 1,5-diamino-2-methylpentane.

In other embodiment, the polyamide in the embodiment 1 may also include polyhexamethylene-dipamide, polyhexamethylenesebacamide, and polycaprolactam, and nylon-6/6,6, in particular having a proportion of caprolactam units in between 5 wt.% to 95 wt.%.

The non-exhaustive list which follows, comprises the aforementioned polyamides in the embodiment 1.

### AB polymers:

| | |
|---|---|
| PA 4 | Pyrrolidone |
| PA 6 | ε-caprolactam |
| PA 7 | Enantholactam |
| PA 8 | Caprylolactam |
| PA 9 | 9-aminopelargonic acid |
| PA 11 | 11-aminoundecanoic acid |
| PA 12 | Laurolactam |

### AA/BB polymers:

| | |
|---|---|
| PA 4.6 | Tetramethylenediamine, adipic acid |
| PA 66 | Hexamethylenediamine, adipic acid |
| PA 6.9 | Hexamethylenediamine, azelaic acid |
| PA 6.10 | Hexamethylenediamine, sebacic acid |
| PA 6.12 | Hexamethylenediamine, decanedicarboxylic acid |
| PA 6.13 | Hexamethylenediamine, undecanedicarboxylic acid |
| PA 12.12 | Dodecane-1,12-diamine, decanedicarboxylic acid |
| PA 13.13 | Tridecane-1,13-diamine, undecanedicarboxylic acid |
| PA 6T | Hexamethylenediamine, terephthalic acid |
| PA 9T | Nonyldiamine, terephthalic acid |
| PA MXD6 | m-xylylenediamine, adipic acid |
| PA 6I | Hexamethylenediamine, isophthalic acid |
| PA 6-3-T | Trimethylhexamethylenediamine, terephthalic acid |
| PA 6.6T | (see PA 6 and PA 6T) |
| PA 6.66 | (see PA 6 and PA 66) |
| PA 6.12 | (see PA 6 and PA 12) |
| PA 66.6.610 | (see PA 66, PA 6 and PA 6.10) |
| PA 6I.6T | (see PA 6I and PA 6T) |
| PA PACM 12 | Diaminocyclohexylmethane, laurolactam |
| PA 6I.6T.PACM | As PA 6I.6T and diaminodicyclohexylmethane |
| PA 12.MACMI | Laurolactam, dimethyldiaminodicyclohexylmethane, isophthalic acid |
| PA 12.MACMT | Laurolactam, dimethyldiaminodicyclohexylmethane, terephthalic acid |
| PA PDA-T | Phenyldiamine, terephthalic acid |

In one embodiment, the polyamide in the embodiment 1 is selected from PA 6, PA 11, PA 12, PA 66, PA 6.9, PA 6.10, and PA 6.12. In another embodiment, it is selected from PA 6, PA 11, PA 12, PA 66, and PA 6.9. In yet another embodiment, it is selected from PA 6, PA 12, and PA 66.

In a further embodiment, the polyamide in the embodiment 1 is selected from PA 6, PA 66, or a blend or a copolymer thereof. In still another embodiment, the polyamide in the embodiment 1 comprises PA 6.

Suitable amounts of the polyamide may be added to the composition in order to achieve the viscosity number, as described herein. In one embodiment, the polyamide in the embodiment 1 is present in an amount in between 20 wt.% to 60 wt.%, based on the total weight of the composition. In another embodiment, it is present in an amount in between 20 wt.% to 60 wt.%, or in between 20 wt.% to 55 wt.%, or in between 25 wt.% to 55 wt.%. In yet another embodiment, it is present in an amount in between 25 wt.% to 50 wt.%, or in between 30 wt.% to 50 wt.%, or in between 30 wt.% to 45 wt.%. In still another embodiment, it is present in an amount in between 30 wt.% to 40 wt.%.

### Reinforcing agent

The polyamide composition of the embodiment 1 also include reinforcing agents in suitable amounts. As is known in the art, the properties of the polyamide composition can be controlled using suitable reinforcing agents.

In one embodiment, the reinforcing agent in the embodiment 1 is selected from metal fiber, metalized inorganic fiber, metalized synthetic fiber, glass fiber, carbon fiber, ceramic fiber, mineral fiber, basalt fiber, kenaf fiber, jute fiber, flax fiber, hemp fiber, cellulosic fiber, sisal fiber, and coir fiber. In another embodiment, it is selected from metalized synthetic fiber, glass fiber, carbon fiber, ceramic fiber, mineral fiber, basalt fiber, kenaf fiber, and jute fiber. In yet another embodiment, it is selected from glass fiber, carbon fiber, ceramic fiber, and mineral fiber. In a further embodiment, the reinforcing agent in the embodiment 1 is glass fiber.

For the purpose of the present invention, the reinforcing agent can be obtained in any shape and size. Further, the reinforcing agent can be subjected to suitable surface treating agent or sizing. For instance, the reinforcing agent can be subjected to surface treatment using coupling agents such as, but not limited to, a silane coupling agent, titanium coupling agent, aluminate coupling agent, urethane coupling agent and epoxy coupling agent. Any suitable techniques for surface treatment can be used for this purpose. For instance, any suitable coating process, such as but not limited to, dip coating and spray coating can be employed.

In one embodiment, the urethane coupling agent comprises at least one urethane group. Suitable urethane coupling agents for use with the reinforcing agents are known to the person skilled in the art, as for instance described in US pub. no. 2018/0282496. In one embodiment, the urethane coupling agent comprises, for example, a reaction product of an isocyanate, such as but not limited to, m-xylylene diisocyanate (XDI), 4,4'-methylenebis(cyclohexyl isocyanate) (HMDI) or isophorone diisocyanate (IPDI), and a polyester based polyol or a polyether-based polyol.

In another embodiment, the epoxy coupling agent comprises at least one epoxy group. Suitable epoxy coupling agents for use with reinforcing agents are known to the person skilled in the art, as for instance described in US pub. no. 2015/0247025 incorporated herein by reference. In one embodiment, the epoxy coupling agent is selected from aliphatic epoxy coupling agent, aromatic epoxy coupling agent or mixture thereof. Non-limiting example of aliphatic coupling agent includes a polyether polyepoxy compound having two or more epoxy groups in a molecule and/or polyol polyepoxy compound having two or more epoxy groups in a molecule. As aromatic coupling agent, a bisphenol A epoxy compound or a bisphenol F epoxy compound can be used.

Suitable amounts of these coupling agents, as described herein, are well known to the person skilled in the art. However, in one embodiment, the coupling agent can be present in an amount of 0.1 parts by mass to 10.0 parts by mass relative to 100 parts by mass of the reinforcing agent.

In one embodiment, the reinforcing agent in the embodiment 1 is present in between 20 wt.% to 50 wt.%, based on the total weight of the composition. In another embodiment, it is present in between 25 wt.% to 50 wt.%, or in between 25 wt.% to 45 wt.%. In yet another embodiment, it is present in between 30 wt.% to 45 wt.%, or in between 35 wt.% to 45 wt.%.

### Flame-retardant mixture

The polyamide composition in the embodiment 1 comprises a flame-retardant mixture comprising (i) 1.0 wt.% to 10.0 wt.% of red phosphorus, and (ii) 1.0 wt.% to 10.0 wt.% of magnesium hydroxide, based on the total weight of the flame-retardant polyamide composition, wherein the weight ratio between (i) and (ii) in the flame-retardant mixture is in between 1:5 to 5:1.

In one embodiment, the red phosphorus in the embodiment 1 is present in between 1.0 wt.% to 9.5 wt.%, or in between 1.5 wt.% to 9.5 wt.%, or in between 1.5 wt.% to 9.0 wt.%. In another embodiment, it is present in between 2.0 wt.% to 9.0 wt.%, or in between 2.0 wt.% to 8.5 wt.%, or in between 2.5 wt.% to 8.5 wt.%. In yet another embodiment, it is present in between 2.5 wt.% to 8.0 wt.%, or in between 3.0 wt.% to 8.0 wt.%, or in between 3.0 wt.% to 7.5 wt.%. In still another embodiment, it is present in between 3.5 wt.% to 7.5 wt.%, or in between 3.5 wt.% to 7.0 wt.%, or in between 4.0 wt.% to 7.0 wt.%.

In the present context, magnesium hydroxide in the embodiment 1 is used as a flame-retardant synergist and may be surface treated with a conventionally known surface treating agent, if required. The amount of the surface treating agent per 100 parts by weight of the magnesium hydroxide is in between 0.1 to 10 parts by weight. The surface treating agent may include higher fatty acids such as oleic acid and stearic acid, alkali metal salts of these higher fatty acids, silane coupling agents such as vinylethoxysilane, vinyl-tris(2-methoxy)silane, gamma-methacryloxypropyltrimethoxysilane, gamma-aminopropyltrimethoxysilane, beta-(3,4-epoxycyclohexyl)ethyltrimethoxysilane, gamma-glycidoxypropyltrimethoxysilane, and gamma-mercaptopropyltrimethoxysilane, titanate-containing coupling agents such as isopropyltriisostearoyl titanate, isopropyltris(dioctylpyrophosphate)titanate, isopropyltri(N-aminoethyl-aminoethyl)titanate and iso-propyltridecylbenzenesulfonyl titanate, aluminum containing coupling agents such as acetoalkoxyaluminum diisopropyllate, and partially esterified products of orthophosphoric acid such as mono- or diestots from orthophosphoric acid and stearyl alcohol and partially esterified products from orthophosphoric acid or an alkali metal salt.

In one embodiment, the magnesium hydroxide in the embodiment 1 may be a powdered solid material, which may be coated or uncoated, as described above. The magnesium hydroxide is used in synergistic amounts, such that the weight ratio between red phosphorus (i) and magnesium hydroxide (ii) in the flame-retardant mixture is in between 1:5 to 5:1. In another embodiment, the ratio is in between 1:4 to 5:1, or in between 1:4 to 4:1, or in between 1:3 to 4:1. In yet another embodiment, the weight ratio is in between 1:3 to 3:1, or in between 1:2 to 3:1, or in between 1:2 to 2:1.

In another embodiment, the magnesium hydroxide in the embodiment 1 is present in an amount in between 1.0 wt.% to 9.5 wt.%, or in between 1.5 wt.% to 9.5 wt.%, or in between 1.5 wt.% to 9.0 wt.%. In another embodiment, it is present in between 2.0 wt.% to 9.0 wt.%, or in between 2.0 wt.% to 8.5 wt.%, or in between 2.5 wt.% to 8.5 wt.%. In yet another embodiment, it is present in between 2.5 wt.% to 8.0 wt.%, or in between 3.0 wt.% to 8.0 wt.%, or in between 3.0 wt.% to 7.5 wt.%. In still another embodiment, it is present in between 3.5 wt.% to 7.5 wt.%, or in between 3.5 wt.% to 7.0 wt.%, or in between 4.0 wt.% to 7.0 wt.%.

In one embodiment, the composition of the embodiment 1 does not contain other flame retardants, in particular the halogenated or non-halogenated nitrogen-based flame retardants.

### Impact modifier

Impact modifiers often also termed rubber or elastomeric polymer, for use in the present invention are, for instance, described in US 2014/03203631 A1 and US 2008/0070023 A1. Suitable impact modifiers are selected from (i) ethylene polymers and copolymers grafted with carboxylic acid, an anhydride thereof, maleimide or an epoxy compound; and (ii) olefin or acrylic acid or anhydride terpolymers and ionomers.

In the ethylene polymers and copolymers grafted with carboxylic acid, anhydride thereof, maleimide or epoxy compound, the carboxylic acid or anhydride thereof is selected from maleic acid, fumaric acid, itaconic acid, acrylic acid, crotonic acid, a C1 to C4 alkyl half ester of maleic acid and their anhydrides or derivatives, including maleic anhydride. Also, olefinic rubbers can also be used as suitable impact modifiers.

In one embodiment, the impact modifiers in the embodiment 1 are ethylene copolymers grafted with a carboxylic acid or any anhydride thereof, such as an ethylene copolymer grafter with maleic anhydride. In other embodiment, the impact modifiers include maleic anhydride grafted ethylene propylene diene terpolymer (EPDM) (maleic anhydride in between 2 wt.-% to 6 wt.-%); ethylene propylene grafted with maleic anhydride (maleic anhydride in between 0.5 wt.-% to 6 wt.-%); maleic anhydride grafted low density polyethylene (maleic anhydride in between 0.2 wt.- % to 6 wt.-%); and ethylene butyl acrylate grafted with maleic anhydride (maleic anhydride in between 0.2 wt.-% to 6 wt.-%).

The olefin or acrylic acid or anhydride terpolymer and ionomer impact modifiers have polymerized in-chain units derived from the monomers comprising: (a) ethylene, butylene, propylene and combinations thereof; (b) in between 2 wt.-% to 25 wt.-% of an acid selected from acrylic acid, methacrylic acid, and mixtures thereof; and (c) 0.1 wt.-% to 15 wt.-% of a dicarboxylic acid monomer selected from maleic acid, fumaric acid, itaconic acid, maleic anhydride, itaconic anhydride, a C1 to C4 alkyl half ester of maleic acid, and a mixture of these dicarboxylic acid monomers. In one embodiment, the terpolymer is an ethylene/methacrylic acid/maleic anhydride ionomer (in between 0.5 wt.-% to 12 wt.-% maleic anhydride). The ionomer can be formed by neutralization of carboxylic acid units in the terpolymer with metal ions selected from zinc, magnesium, manganese and mixtures thereof, alone or in combination with sodium or lithium ions. The terpolymer may further include up to 40 wt.-% of C1 to C8 alkyl acrylate monomer units.

In one embodiment, the impact modifier in the embodiment 1 is present in between 0.1 wt.% to 10.0 wt.%, based on the total weight of the polyamide composition. In another embodiment, it is present in between 0.1 wt.% to 9.0 wt.%, or in between 0.2 wt.% to 9.0 wt.%, or in between 0.2 wt.% to 8.0 wt.%. In still another embodiment, it is present in between 0.3 wt.% to 8.0 wt.%, or in between 0.3 wt.% to 7.0 wt.%, or in between 0.4 wt.% to 7.0 wt.%. In yet another embodiment, it is present in between 0.4 wt.% to 6.0 wt.%, or in between 0.5 wt.% to 6.0 wt.%, or in between 0.5 wt.% to 5.0 wt.%, or in between 0.5 wt.% to 4.0 wt.%. In a further embodiment, it is present in between 0.5 wt.% to 3.0 wt.%, or in between 0.5 wt.% to 2.0 wt.%.

### Stabilizers

In the present context, stabilizers in the embodiment 1 include antioxidants and heat stabilizers.

Stabilizers include, such as but not limited to, organic stabilizers such as phosphorus stabilizers, hindered phenol stabilizers, hindered amine stabilizers, oxanilide stabilizers, organic sulfur stabilizers and secondary aromatic amine stabilizers; and inorganic stabilizers such as copper compounds and halides.

Phosphite compounds include, for example, distearylpentaerythritol diphosphite, di-nonylphenylpentaerythritol diphosphite, bis(2,4-di-t-butylphenyl)pentaerythritol diphosphite, bis(2,6-di-t-butyl-4-methylphenyl)pentaerythritol diphosphite, bis(2,6-di-t-butyl-4-ethyl phenyl) pentaerythritol diphosphite, bis(2,6-di-t-butyl-4-isopropylphenyl)pentaerythritol diphosphite, bis(2,4,6-tri-t-butylphenyl)pentaerythritol diphosphite, bis(2,6-di-t-butyl-4-sec-butylphenyl)pentaerythritol diphosphite, bis(2,6-di-t-butyl-4-t-octylphenyl)pentaerythritol diphosphite, and bis(2,4-dicumylphenyl)pentaerythritol diphosphate.

Hindered phenol stabilizers include, for example, n-octadecyl-3-(3,5-di-t-butyl-4-hydroxyphenyl)propionate, 1,6-hexanediol bis[3-(3,5-di-t-butyl-4-hydroxyphenyl)propionate], pentaerythritol tetrakis[3-(3,5-di-t-butyl-4-hydroxyphenyl)propionate], 3,9-bis[1,1-dimethyl-2-{β-(3-t-butyl-4-hydroxy-5-methylphenyl)propionyloxy}ethyl]-2,4,8,10-tetraoxaspiro[5,5]undecane, triethylene glycol bis[3-(3-t-butyl-5-methyl-4-hydroxyphenyl)propionate], 3,5-di-t-butyl-4-hydroxybenzyl phosphonate diethyl ester, 1,3,5-trimethyl-2,4,6-tris(3,5-di-t-butyl-4-hydroxybenzyl)benzene, 2,2-thiodiethylenebis[3-(3,5-di-t-butyl-4-hydroxyphenyl)propionate], tris(3,5-di-t-butyl-4-hydroxybenzyl)isocyanurate, and N,N'-hexamethylenebis(3,5-di-t-butyl-4-hydroxyhydrocinnamide). Hindered amine stabilizers include, for example, well-known hindered amine compounds having a 2,2,6,6-tetramethylpiperidine skeleton. Specific examples of hindered amine compounds include 4-acetoxy-2,2,6,6-tetramethylpiperidine, 4-stearoyloxy-2,2,6,6-tetramethylpiperidine, 4-acryloyloxy-2,2,6,6-tetramethylpiperidine, 4-phenylacetoxy-2,2,6,6-tetramethylpiperidine, 4-benzoyloxy-2,2,6,6-tetramethylpiperidine, 4-methoxy-2,2,6,6-tetramethylpiperidine, 4-stearyloxy-2,2,6,6-tetramethylpiperidine, 4-cyclohexyloxy-2,2,6,6-tetramethylpiperidine, 4-benzyloxy-2,2,6,6-tetramethylpiperidine, 4-phenoxy-2,2,6,6-tetramethylpiperidine, 4-ethylcarbamoyloxy-2,2,6,6-tetramethylpiperidine, 4-cyclohexylcarbamoyloxy-2,2,6,6-tetramethylpiperidine, 4-phenylcarbamoyloxy-2,2,6,6-tetramethylpiperidine, bis(2,2,6,6-tetramethyl-4-piperidyl)carbonate, bis(2,2,6,6-tetramethyl-4-piperidyl)oxalate, bis(2,2,6,6-tetramethyl-4-piperidyl)malonate, bis(2,2,6,6-tetramethyl-4-piperidyl)sebacate, bis(2,2,6,6-tetramethyl-4-piperidyl)adipate, bis(2,2,6,6-tetramethyl-4-piperidyl)terephthalate, 1,2-bis(2,2,6,6-tetramethyl-4-piperidyloxy)ethane, α,α'-bis(2,2,6,6-tetramethyl-4-piperidyloxy)-p-xylene, bis(2,2,6,6-tetramethyl-4-piperidyltolylene)-2,4-dicarbamate, bis(2,2,6,6-tetramethyl-4-piperidyl)hexamethylene-1,6-dicarba mate, tris(2,2,6,6-tetramethyl-4-piperidyl)benzene-1,3,5-tricarboxy late, tris(2,2,6,6-tetramethyl-4-piperidyl)benzene-1,3,4-tricarboxy late, 1-[2-{3-(3,5-di-t-butyl-4-hydroxyphenyl)propionyloxy}butyl]-4 -[3-(3,5-di-t-butyl-4-hydroxyphenyl)propionyloxy]-2,2,6,6-tet ramethylpiperidine, the condensation product of 1,2,3,4-butanetetracarboxylic acid and 1,2,2,6,6-pentamethyl-4-piperidinol and β,β,β',β'-tetramethyl-3,9-[2,4,8,10-tetraoxaspiro(5,5)undecane]diethanol, the polycondensation product of dimethyl succinate and 1-(2-hydroxyethyl)-4-hydroxy-2,2,6,6-tetramethylpiperidine, and 1,3-benzenedicarboxamide-N,N'-bis(2,2,6,6-tetramethyl-4-piperidyl).

Amine antioxidants refer to amine compounds other than the hindered amine stabilizers mentioned above, and include, for example, the reaction products of N-phenylbenzeneamine with 2,4,4-trimethylpentene, N,N'-diphenyl-p-phenylenediamine, N-phenyl-N'-isopropyl-p-phenylenediamine, N-phenyl-N'-(1,3-dimethylbutyl)-p-phenylenediamine, N,N'-di-2-naphthyl-p-phenylenediamine, polymerized 1,2-dihydro-2,2,4-trimethylquinoline, and 6-ethoxy-1,2-dihydro-2,2,4-trimethylquinoline.

Oxanilide stabilizers include 4,4'-dioctyloxyoxanilide, 2,2'-diethoxyoxanilide, 2,2'-dioctyloxy-5,5'-di-tert-butoxanilide, 2,2'-didodecyloxy-5,5'-di-tert-butoxanilide, 2-ethoxy-2'-ethyloxanilide, N,N'bis(3-dimethylaminopropyl)oxanilide, 2-ethoxy-5-tert-butyl-2'-ethoxanilide and mixtures thereof with 2-ethoxy-2'-ethyl-5,4'-di-tert-butoxanilide, mixtures of o- and p-methoxy-disubstituted oxanilides, mixtures of o- and p-ethoxy-disubstituted oxanilides.

Organic sulfur stabilizers include, for example, organic thioate compounds such as didodecyl thiodipropionate, ditetradecyl thiodipropionate, dioctadecyl thiodipropionate, pentaerythritol tetrakis(3-dodecylthiopropionate) and thiobis(N-phenyl-β-naphthylamine); mercaptobenzimidazole compounds such as 2-mercaptobenzothiazole, 2-mercaptobenzimidazole, 2-mercaptomethylbenzimidazole and metal salts of 2-mercaptobenzimidazole; dithiocarbamate compounds such as metal salts of diethyldithiocarbamic acid and metal salts of dibutyldithiocarbamic acid; and thiourea compounds such as 1,3-bis(dimethylaminopropyl)-2-thiourea and tributylthiourea; as well as tetramethylthiuram monosulfide, tetramethylthiuram disulfide, nickel dibutyl dithiocarbamate, nickel isopropyl xanthate, and trilauryl trithiophosphite.

Secondary aromatic amine stabilizers preferably include compounds having a diphenylamine skeleton, compounds having a phenylnaphthylamine skeleton and compounds having a dinaphthylamine skeleton. Specifically, compounds having a diphenylamine skeleton include p,p'-dialkyldiphenylamine (wherein the alkyl group contains 8 to 14 carbon atoms), octylated diphenylamine, 4,4'-bis(α,α-dimethylbenzyl)diphenylamine, p-(p-toluenesulfonylamide)diphenylamine, N,N'-diphenyl-p-phenylenediamine, N-phenyl-N'-isopropyl-p-phenylenediamine, N-phenyl-N'-(1,3-dimethylbutyl)-p-phenylenediamine and N-phenyl-N'-(3-methacryloyloxy-2-hydroxypropyl)-p-phenylenedi amine; compounds having a phenylnaphthylamine skeleton include N-phenyl-1-naphthylamine and N,N'-di-2-naphtyl-p-phenylenediamine; and compounds having a dinaphthylamine skeleton include 2,2'-dinaphthylamine, 1,2'-dinaphthylamine and 1,1'-dinaphthylamine.

Inorganic stabilizers include copper compounds and halides. Copper compounds are copper salts of various inorganic or organic acids excluding the halides described below. Copper may be either cuprous or cupric, and specific examples of copper salts include copper chloride, copper bromide, copper iodide, copper phosphate, copper stearate as well as natural minerals such as hydrotalcite, stichitite and pyrolite.

In one embodiment, the stabilizer in the embodiment 1 is present in between 0.01 wt.% to 5.0 wt.%, based on the total weight of the composition. In another embodiment, it is present in between 0.01 wt.% to 4.0 wt.%, or in between 0.01 wt.% to 3.0 wt.%, or in between 0.01 wt.% to 2.0 wt.%.

### Dispersing agent

The polyamide composition of the embodiment 1 also comprises the dispersing agent, which is added for the purpose of preventing coagulation, if any, in the flame-retardant mixture. In one embodiment, the dispersing agent in the embodiment 1 is selected from carboxylic amide-base wax, metal salt of higher fatty acid, and higher fatty acid ester compound.

The carboxylic amide-base wax may be exemplified by compounds obtained by dehydration reaction between higher aliphatic monocarboxylic acid and/or polybasic acid and diamine. The higher aliphatic monocarboxylic acid is preferably saturated aliphatic monocarboxylic acid and hydroxycarboxylic acid having 16 or more carbon atoms, and is exemplified by palmitic acid, stearic acid, behenic acid, montanic acid, and 12-hydroxystearic acid. The polybasic acid is a dibasic or higher carboxylic acid and may be exemplified by aliphatic dicarboxylic acids such as maronic acid, succinic acid, adipic acid, sebacic acid, pimelic acid, and azelaic acid; aromatic dicarboxylic acids such as phthalic acid, and terephthalic acid; and alicyclic dicarboxylic acids such as cyclohexyl dicarboxylic acid and cyclohexyl succinic acid. The diamine may be exemplified by ethylene diamine, 1,3-diaminopropane, 1,4-diaminobutane, hexamethylenediamine, m-xylylene diamine, tolylene diamine, p-xylylene diamine, phenylene diamine, and isophorone diamine.

The carboxylic amide-base wax is preferably a compound obtained by a polycondensation reaction among stearic acid, sebacic acid and ethylene diamine. For example, a compound obtained by a polycondensation reaction among 2 mol of stearic acid, 1 mol of sebacic acid, and 2 mol of ethylene diamine.

The metal salt of higher fatty acid may be exemplified by metal salt of the above-described higher aliphatic monocarboxylic acid. For instance, calcium stearate, barium stearate, magnesium stearate, aluminum stearate, zinc stearate, and calcium montanite may be used in the embodiment 1. The higher fatty acid ester compound may be exemplified by ester compound formed between the above-described higher aliphatic monocarboxylic acid and alcohol, and more specifically, stearyl stearate, glycerin stearate, and pentaerythritol stearate.

In one embodiment, the dispersing agent is present in an amount in between 0.1 wt.% to 5.0 wt.%, based on the total weight of the composition. In another embodiment, it is present in between 0.1 wt.% to 4.5 wt.%, or in between 0.1 wt.% to 4.0 wt.%, or in between 0.1 wt.% to 3.5 wt.%. In yet another embodiment, it is present in between 0.1 wt.% to 3.0 wt.%, or in between 0.1 wt.% to 2.5 wt.%, or in between 0.1 wt.% to 2.0 wt.%.

### Additives

In one embodiment, the polyamide composition in the embodiment 1 further comprises additives. Suitable additives include, such as but not limited to, dyes, pigments, UV absorbers, antistats, fungistats, bacteriostats, and IR absorbing materials.

Other additives may also be added to the polyamide composition. These include anti-dripping agents; copper-, phosphorus- or sulfur-containing thermal stabilizers; weatherability modifier; foaming agents; lubricants; plasticizers; fluidity modifiers; organic fillers; and nucleating agents.

Suitable amounts of these additives may be used in the present invention. In one embodiment, the polyamide composition in the embodiment 1 is present in an amount in between 0.1 wt.% to 10 wt.%, based on the total weight of the polyamide composition.

The ingredients and additives, as described herein, are selected such that the viscosity number of the composition is in between 114 ml/g to 300 ml/g, determined according to ISO 307. In one embodiment, the viscosity number of the composition in the embodiment 1 is in between 114 ml/g to 290 ml/g, determined according to ISO 307. In another embodiment, it is in between 114 ml/g to 280 ml/g, or in between 114 ml/g to 270 ml/g, or in between 114 ml/g to 260 ml/g. In yet another embodiment, it is in between 114 ml/g to 250 ml/g, or in between 114 ml/g to 240 ml/g, or in between 114 ml/g to 230 ml/g. In a further embodiment, it is in between 114 ml/g to 220 ml/g, or in between 114 ml/g to 210 ml/g, or in between 114 ml/g to 200 ml/g.

The synergistic amounts of the ingredients and additives, as described herein, results in the polyamide composition meeting the highest quality of fire resistance, i.e. 5VA ratings in accordance with UL94 standard. The flammability test method is determined using the Underwriters Laboratories test method UL94. The standard determines the material's tendency to either extinguish or spread the flame once the specimen has been ignited. Tests are generally conducted on a 5" × 1/2" specimen of the minimum approved thickness. For 5VA rating, test is performed on both bar and plaque specimens, and the flame ignition source is approximately five times as severe as that used for testing the other materials. The composition meets 5VA rating if the burning stops within 60 seconds on a vertical specimen, with no drips and plaque specimen not developing holes.

Further, the composition of the present invention can be easily processed, and still showcase acceptable properties of tensile strength, %elongation, flexural strength and Charpy notch strength, thereby rendering it useful for making shaped articles, such as industrial fans or blowers.

### Process

A process for preparing the flame-retardant polyamide composition may comprise at least the step of compounding the ingredients and optionally the additives, as described herein. Compounding per se is a technique which is well known to the person skilled in the art of polymer processing and manufacture and consists of preparing plastic formulations by mixing and/or blending the ingredients and optionally the additives of the embodiment 1 in a molten state. Mixing can be carried out at a rotational speed ranging between 200 rpm to 320 rpm. It is understood in the art that compounding is distinct from blending or mixing processes conducted at temperatures below that at which the ingredients become molten. Compounding may, for example, be used to form a masterbatch composition. Compounding may, for example, involve adding a masterbatch composition to a polymer to form a further polymer composition.

The polyamide composition may, for example, be extruded. For example, compounding may be carried out using a screw, e.g. a twin screw. For example, compounding may be carried out using a multi roll mill, for example a two-roll mill. For example, compounding may be carried out using co-kneader or internal mixer. The methods disclosed herein may, for example, include compression molding or injection molding. The ingredients and optionally the additives may be premixed and fed from a single hopper. The resulting melt may, for example, be cooled, for example in water bath, and then pelletized.

### Industrial fan or blower

Industrial fans or blowers are machines whose primary function is to provide and accommodate a large flow of air or gas to various parts of a building or other structures, for e.g. manufacturing sites. This is achieved by rotating a number of blades, connected to a hub and shaft, and driven by a motor or turbine. The flow rates of these mechanical fans range from approximately 200 cubic feet (5.7 m³) to 2,000,000 cubic feet (57,000 m³) per minute. A blower is another name for a fan that operates where the resistance to the flow is primarily on the downstream side of the fan. There are many uses for the continuous flow of air or gas that industrial fans generate, including, such as but not limited to, combustion, ventilation, aeration, particulate transport, exhaust, cooling, air-cleaning, and drying, to name a few. The industries served include, for e.g., electrical power production, pollution control, metal manufacturing and processing, cement production, mining, petrochemical, food processing, cryogenics, and clean rooms.

Due to the high temperature operation of these industrial fans or blowers, it is pertinent that the material of construction is appropriately selected, more importantly having very high flame-retardancy. Accordingly, the present invention polyamide composition of the embodiment 1 or 2 may be employed for this purpose.

### EXAMPLES

The presently claimed invention is illustrated by the non-restrictive examples which are as follows:

### Raw materials

| | |
|---|---|
| Polyamide (PA) | Polyamide 6 having viscosity number ranging between 190 ml/g to 200 ml/g, determined according to ISO 307, obtained from BASF |
| Reinforcing agent (RA) | Glass fiber |
| Flame retardant (FR) | FR1: Red phosphorus, obtained from Shinde |
| | FR2: Magnesium hydroxide, obtained from Martin Marietta Magnesia Specialities, LLC |
| Impact modifier (IM) | Ethylene acrylic acid copolymer, obtained from DOW |
| Stabilizer (ST) | ST1: polymerized 1,2-dihydro-2,2,4-trimethylquinoline, obtained from Addivant Corporation |
| | ST2: zinc oxide, obtained from Sigma Aldrich |
| Dispersing agent (DA) | Calcium stearate, obtained from Sigma Aldrich |
| Additives (AD) | Black color, obtained from Sigma Aldrich |

### Standard methods

| | |
|---|---|
| Tensile strength | ISO 527 |
| %Elongation | ISO 527 |
| Flexural strength | ISO 178 |
| Charpy impact resistance | ISO 179 |
| Charpy notch resistance | ISO 179 |

General synthesis of flame-retardant polyamide composition

The details about the inventive and comparative polyamide composition is summarized in Table 1 below. All amounts in wt.%.

**Table 1: inventive and comparative polyamide compositions**

| Ingredients | Inv. Ex. 1 | Inv. Ex. 2 | Comp. Ex. 1 |
|---|---|---|---|
| PA | 38.95 | 37.95 | 44.95 |
| RA | 40 | 40 | 40 |
| FR1 | 6.0 | 5.0 | 6.0 |
| FR2 | 6.0 | 8.0 | -- |
| IM | 1.0 | 1.0 | 1.0 |
| ST1 | 0.45 | 0.45 | 0.45 |
| ST2 | 0.30 | 0.30 | 0.30 |
| DA | 0.50 | 0.50 | 0.50 |
| AD | 6.80 | 6.80 | 6.80 |

| PROCESSING CONDITION | | | |
|---|---|---|---|
| Compounding temperature (°C) | 270°C | 281°C | 270°C |
| Rate, kg/h | 18.12 | 15.86 | 22.65 |
| Rpm | 350 | 350 | 300 |
| Viscosity number of flame bars, ml/g | 123 | 123 | n.d. |

| | | | |
|---|---|---|---|
| n.d. = not determined | | | |

Polyamide compositions, both inventive and comparative, were extruded using WP 25mm laboratory twin-screw extruder at the above-mentioned process conditions. Another comparative example (Comp. Ex. 2) having Ultramid^{®} B3G8 BK (polyamide 6 with 40% glass fiber) was used, but without containing the flame-retardant mixture according to the invention.

### Mechanical testing and UL94 flame retardancy

ISO type A bar samples having dimensions of 10.0 mm × 4.0 mm were prepared and tested for their mechanical properties in accordance with the respective standards. Additionally, samples having thickness of 2.0 mm were prepared and tested for flame retardance as per UL94 standard. The test results are summarized in Table 2 below.

**Table 2: test results for inventive and comparative samples**

| Property | Inv. Ex. 1 | Inv. Ex. 2 | Comp. Ex. 1 | Comp. Ex. 2 |
|---|---|---|---|---|
| Tensile strength, MPa | 168 | 169 | 185 | 200 |
| %Elongation | 2.4 | 2.1 | 2.1 | 2.5 |
| Flexural strength, MPa | 261 | 264 | 269 | 310 |
| Flexural modulus, MPa | 13320 | 13900 | 13000 | 12400 |
| Charpy impact resistance, kJ/m² | 11.6 | 11.4 | 13 | 15 |
| Charpy Notched resistance, kJ/m² | 62.6 | 61.7 | 60 | 90 |
| 5VA flammability | Passed | Passed | Failed | Failed |

It can be observed that the inventive polyamide compositions meet the flammability requirements of 5VA in accordance with UL94 standards, while the comparative formulations containing red phosphorus alone (see Comp. Ex. 1) and not containing any flame retardant (see Comp. Ex. 2) in accordance with the present invention, did not meet the said requirements. Moreover, the inventive polyamide compositions have properties similar to the comparative formulations, which renders them suitable for industrial fan or blower

## Claims

1. An industrial fan or blower comprising a flame-retardant polyamide composition comprising:
(a) 20 wt.% to 60 wt.% of a polyamide having a viscosity number in between 90 ml/g to 350 ml/g determined according to ISO 307,
(b) 20 wt.% to 50 wt.% of a reinforcing agent,
(c) a flame-retardant mixture comprising (i) 1.0 wt.% to 10.0 wt.% of red phosphorus, and (ii) 1.0 wt.% to 10.0 wt.% of magnesium hydroxide, based on the total weight of the flame-retardant polyamide composition, wherein the weight ratio between (i) and (ii) in the flame-retardant mixture is in between 1:5 to 5:1,
(d) 0.1 wt.% to 10.0 wt.% of an impact modifier,
(e) 0.01 wt.% to 5.0 wt.% of a stabilizer, and
(f) 0.1 wt.% to 5.0 wt.% of a dispersing agent,
wherein the flame-retardant polyamide composition has a viscosity number of at least 114 ml/g, determined according to ISO 307.

2. The industrial fan or blower according to claim 1, wherein the polyamide has a viscosity number in between 150 ml/g to 210 ml/g determined according to ISO 307.

3. The industrial fan or blower according to claim 1 or 2, wherein the polyamide is selected from polyamide 6, polyamide 66, or a blend or a copolymer thereof.

4. The industrial fan or blower according to one or more of claims 1 to 3, wherein the reinforcing agent is glass fiber.

5. The industrial fan or blower according to one or more of claims 1 to 4, wherein the weight ratio between (i) and (ii) is in between 1:2 to 2:1.

6. The industrial fan or blower according to one or more of claims 1 to 5 further comprising ad-ditives.

7. The industrial fan or blower according to claim 6, wherein the additive is selected from dyes, pigments, UV absorbers, antistats, fungistats, bacteriostats, and IR absorbing materials.

8. The industrial fan or blower according to one or more of claims 1 to 7, wherein the flame-retardant polyamide composition meets the fire resistance requirements of 5VA in accordance with UL94 standard.

## Patentansprüche

1. Ein industrieller Ventilator oder Gebläse, der aus einer flammhemmenden Polyamid-Zusammensetzung besteht:
(a) 20 Wt.% bis 60 Wt.% eines Polyamids mit einer Viskositätszahl zwischen 90 ml/g und 350 ml/g, bestimmt gemäß ISO 307,
(b) 20 Gewicht bis 50 Gewicht des Verstärkungsmittels,
(c) eine flammhemmende Mischung, die (i) 1,0 bis 10,0 Gewicht Phosphor und (ii) 1,0 bis 10,0 Gewicht Magnesiumhydroxid von 1,0 % bis 10,0 % enthält. Flammhemmende Polyamid-Zusammensetzung, wobei das Gewichtsverhältnis zwischen (i) und (ii) im flammhemmenden Gemisch zwischen 1:5 und 5:1 liegt,
(d) 0,1 Wt.% bis 10,0 Wt.% eines Impact-Modifikators,
(e) 0,01 Wt.% bis 5,0 Wt.% eines Stabilisators, und
(f) 0,1 Gewicht % bis 5,0 Gewicht eines Dispergierungsmittels,
wobei die flammhemmende Polyamidzusammensetzung eine Viskositätszahl von mindestens 114 ml/g besitzt, die gemäß ISO 307 bestimmt wird.

2. Der industrielle Ventilator oder Gebläse gemäß Anspruch 1, wobei das Polyamid eine Viskositätszahl zwischen 150 ml/g und 210 ml/g gemäß ISO 307 aufweist.

3. Der industrielle Ventilator oder Gebläse gemäß Anspruch 1 oder 2, bei dem das Polyamid aus Polyamid 6, Polyamid 66 oder einer Mischung oder einem Copolymer davon ausgewählt wird.

4. Der industrielle Ventilator oder Gebläse gemäß einem oder mehreren der Ansprüche 1 bis 3, wobei die Verstärker-
Das Mittel ist Glasfaser.

5. Der industrielle Ventilator oder Gebläse gemäß einem oder mehreren der Ansprüche 1 bis 4, wobei das Gewichtsverhältnis zwischen (i) und (ii) zwischen 1:2 und 2:1 liegt.

6. Der industrielle Ventilator oder Gebläse gemäß einem oder mehreren der Ansprüche 1 bis 5 umfassen weitere Zusatzfunktionen.

7. Der industrielle Ventilator oder Gebläse gemäß Anspruch 6, bei dem der Zusatzstoff aus Farbstoffen, Pigmenten, UV-Absorbern, Antistaten, Fungistaten, Bakteriostaten und IRabsorbierendem Material ausgewählt wird.
ALS.

8. Der industrielle Ventilator oder Gebläse gemäß einem oder mehreren der Ansprüche 1 bis 7, wobei die flammhemmende Polyamid-Zusammensetzung die Feuerfestigkeitsanforderungen von 5VA gemäß UL94-Standard erfüllt.

## Revendications

1. Un ventilateur ou ventilateur industriel composé d'une composition en polyamide ignifuge comprenant :
(a) 20 % à 60 % en poids d'une polyamide ayant un nombre de viscosité compris entre 90 ml/g et 350 ml/g déterminé selon la norme ISO 307,
(b) 20 % à 50 % d'un agent de renfortage,
(c) un mélange ignifuge composé (i) de 1,0 % à 10,0 % de phosphore rouge, et (ii) de 1,0 % à 10,0 % de magnésium, basé sur le poids total de la
Composition de polyamide ignifuge, où le rapport de poids entre (i) et (ii) dans le mélange ignifuge est compris entre 1:5 et 5:1,
(d) 0,1 % à 10,0 % en poids d'un modificateur d'impact,
(e) 0,01 % à 5,0 % en poids d'un stabilisateur, et
(f) 0,1 % à 5,0 % en poids d'un agent disperseur,
où la composition de polyamide ignifuge a un nombre de viscosité d'au moins 114 ml/g, déterminé selon l'ISO 307.

2. Le ventilateur industriel ou souffleur selon la revendication 1, où la polyamide a un nombre de viscosité compris entre 150 ml/g et 210 ml/g déterminé selon l'ISO 307.

3. Le ventilateur industriel ou le ventilateur selon la revendication 1 ou 2, où la polyamide est sélectionnée parmi la polyamide 6, la polyamide 66, ou un mélange ou un copolymère de ceux-ci.

4. Le ventilateur industriel ou souffleur selon une ou plusieurs revendications 1 à 3, dans lesquelles le réinforc-
L'agent d'ing-ing est la fibre de verre.

5. Le ventilateur industriel ou le souffleur selon une ou plusieurs des revendications 1 à 4, où le rapport de poids entre (i) et (ii) est compris entre 1:2 et 2:1.

6. Le ventilateur industriel ou souffleur selon une ou plusieurs des revendications 1 à 5, comprenant en outre des ad-ditives.

7. Le ventilateur industriel ou souffleur selon la revendication 6, où l'additif est sélectionné parmi des colorants, pigments, absorbeurs UV, antistats, fongistats, bactériostats et matériaux absorbants IR-
ALS.

8. Le ventilateur industriel ou le ventilateur selon une ou plusieurs des revendications 1 à 7,
où la composition du polyamide ignifuge répond aux exigences de résistance au feu de 5VA conformément à la norme UL94.
